# EUROPEAN PATENT SPECIFICATION

(11) **EP 2 669 708 B1**
(45) Date of publication and mention of the grant of the patent: **07.09.2016**
(21) Application number: 12004211.4
(22) Date of filing: 01.06.2012
(51) Int. Cl.: G01S 19/21, G01S 7/02, G01S 5/02

(54) **Method of detecting a direction of arrival of at least one interference signal and system to carry out said method**
Verfahren zur Erkennung einer Ankunftsrichtung mindestens eines Störsignals, und System zur Ausführung des Verfahrens
Procédé de détection d'une direction d'arrivée d'au moins un signal d'interférence et système pour mettre en 'uvre ledit procédé

(43) Date of publication of application: 04.12.2013
(73) Proprietor: Airbus DS GmbH, 82024 Taufkirchen (DE)
(72) Inventor: Floch, Jean-Jacques, 81677 München (DE)
(74) Representative: Frenkel, Matthias Alexander

(56) References cited:
- US-A1- 2002 169 578
- US-A1- 2008 036 645
- US-A1- 2009 066 574
- US-B1- 6 784 831
- ANDREW BROWN ET AL: "Locating the Jammer using A/J Software Receiver", PROCEEDINGS OF ION GNSS 2004, 24 September 2004 (2004-09-24), pages 110-121, XP55017928, Long Beach, CA, USA

## Description

### FIELD OF THE INVENTION

The present invention is directed to a method of detecting a direction of arrival of at least one interference signal interfering a wanted signal in a plurality of received signals according to the preamble of claim 1. This inventive method is preferably applied in global navigation satellite systems (GNSS). The invention is further directed to a device adapted to carry out said method.

### BACKGROUND OF THE INVENTION

A common problem in the processing of signal data received by receiver chains connected to an antenna array is the amount of received data which have to be analyzed in order to characterize an interference. An antenna array solution is already one of the most promising techniques to get rid of the interferences. In the navigation signal processing field it is already known to apply a beam forming technique to a wanted signal in order to reject interferences and to improve significantly the navigation performance.

US 6,784,831 B1 discloses a GPS signal receiver including a plurality of antenna elements each receiving a plurality of GPS signals. A plurality of mixers and a combining node convert the GPS signals received at the antenna elements in a frequency-division-multiplexed (FDM) manner over FDM frequency bands logically assigned to the antenna elements to produce a composite signal representing such GPS signals. An analog-to-digital converter converts an analog signal derived from the composite signal into a digital word stream. Demultiplexing logic extracts GPS signal components in the digital word stream. The GPS signal components correspond to the FDM frequency bands logically assigned to the antenna elements. Beam forming logic, operably coupled to the demultiplexing logic, applies variable phase delay and variable gain to each GPS component in accordance with a set of weight values supplied thereto. The beam forming logic can be controlled to perform adaptive beam steering/nulling operations.

US 2008/0036645 A1 shows and describes an electronic scanning radar apparatus comprising an interference suppressor in which slices of input sampled data are selected, a frequency spectrum Computing portion 20, an interference frequency detector 18, a phase corrector, a digital beamforming processing device, a maximum peak direction extractor and an interference direction selector. After the FFT of the short time data is calculated in the frequency spectrum computing portion, the interference frequency detector obtains an average between a number of channels of power after discrete Fourier transformation, and detects a frequency peak which identifies an interfering signal. Finally, digital beamforming is executed in the DBF processing device so as to extract maximum peaks of the power of an azimuth direction, and the frequency candidate showing the maximum peak power is selected and the arrival azimuth of the interference element is estimated by an interference direction selector.

### OBJECT OF THE INVENTION

However, it can also be of interest to find out the sources of interferences (the interferers) or at least the direction of arrival of the interferences with a minimum of data to be processed. It is thus an object of the present application to provide an efficient method of detecting a direction of arrival of at least one interference signal interfering a wanted signal in a plurality of received signals.

### SUMMARY OF THE INVENTION

This problem is solved by the method according to claim 1.

This inventive method proposes to use a beam forming signal processing technique in order to precisely characterize an interference. Therefor, the inventive method of detecting a direction of arrival of at least one interference signal interfering a wanted signal in a plurality of received signals, wherein the signals are received by a plurality of antenna elements of an antenna array, each antenna element being assigned to a receiver chain, carries out the steps of detecting for a pulse in said plurality of received signals and, upon detection of pulse in the signals received by a receiver chain, providing the same short sample sequence from said plurality of received signals including the pulse by all antenna elements, and identifying said at least one interference signal in said plurality of received signals in a DOA processor by comparing the noise level of said received signals with a power level of a signal received from a potential interferer; applying a beam forming signal processing technique to said at least one identified interference signal and evaluating the direction of arrival from the results of said beam forming signal processing step.

By applying the beam forming signal processing technique not only to the wanted signal but also to at least one interference signal, the invention proposes a new concept for analyzing the interference and proposes a way to cope with the high amount of data to be analyzed. Such an automatic detection of interferences using an antenna array and reducing the amount of data to be processed is not known from the prior art.

In a preferred further development of the inventive method digital data are obtained from the signals received by said plurality of receivers, wherein each of the receivers is connected to at least one of said plurality of antennas, and said digital data coming from said digital receivers are collected to evaluate a cross-covariance matrix.

In another further development said beam forming signal processing technique is a pre-correlation beam forming signal processing technique. However, also a post-correlation beam forming signal processing technique can be applied.

It is also preferred to carry out said evaluation step by applying a direction-of-arrival (DOA) algorithm to said cross-covariance matrix. Known algorithms like ESPRIT or MUSIC can be used therefor.

It is furthermore preferred to carry out said identification step by comparing the noise level of said received signal with a power level of a signal received from a potential interferer.

The invention is further directed to a signal receiving and processing device according to claim 8. This inventive device comprises
- an antenna array with a plurality of antennas,
- a plurality of signal receivers wherein each of the receivers is connected to at least one of said plurality of antennas and
- a plurality of signal processing sub-systems which are adapted to carry out a method according to one of claims 1 to 7.

This invention allows using antenna array techniques to characterize the interference (time, frequency) with high accuracy. It is a good way to know whether the interference is intentional or non intentional. It may be possible to distinguish between signals allowed in the frequency band and interference. The interference is also a fingerprint of the interferer. It is a way to identify the user of the interferer.

The principle of this innovation is to use extra beams to define and characterize perfectly the interferences (DOA, time, frequency) in the band of interest for the GNSS signal tracking. As the sampling rate is very high, it is currently not possible to use all the data available. The second idea is thus to use only some sequences of data including the presence of interferences to evaluate the covariance matrix to calculate the coefficients for the tracking beams and to detect the direction of arrival of the interferences.

The invention is hereinafter described by example with reference to the drawings. In these drawings
- **Fig. 1**: shows a concept scheme of the method according to the present invention;
- **Fig. 2**: shows a concept scheme of the device according to the present invention;
- **Fig. 3**: shows a scheme of the inventive method in the case of one interferer; and
- **Fig. 4**: shows a mathematical scheme of the inventive method in the case shown in Fig. 3.

### DETAILED DESCRIPTION OF THE INVENTION

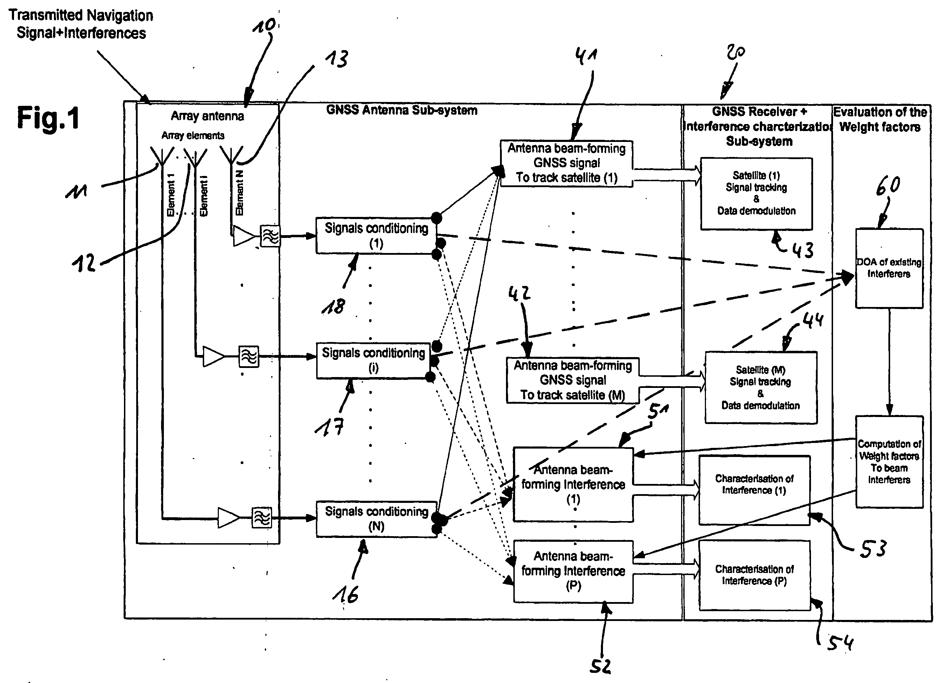

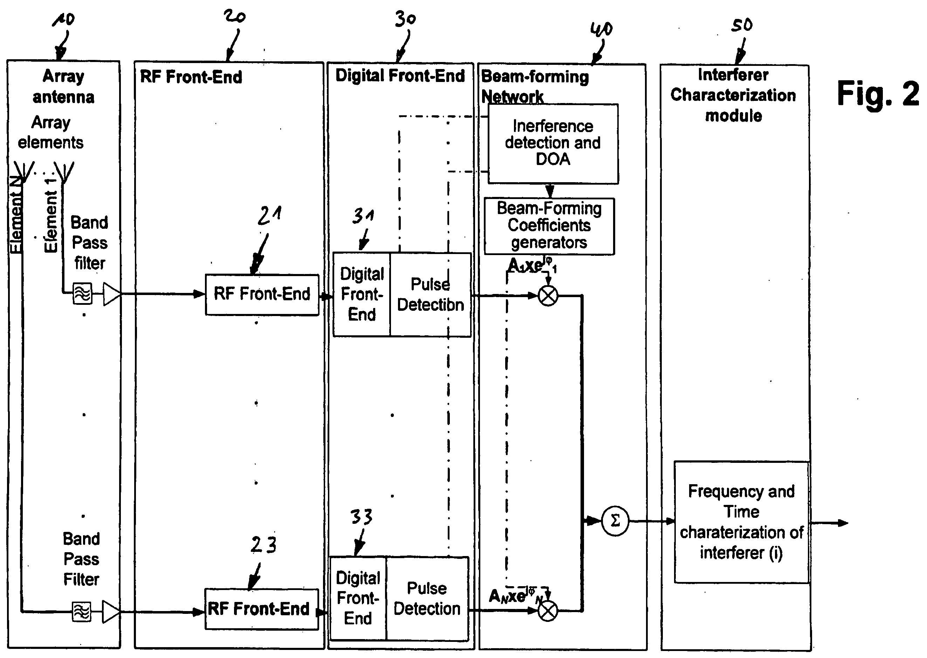

As shown in Fig. 1 and Fig. 2 the digital data are coming from a number of N receiver chains. Each antenna element 11, 12, 13 of an antenna array 10 is connected to a signal conditioning unit 16, 17,18 and is assigned to each receiver chain 21, 23 of a receiving front end 20. Each receiver chain is connected to an associated digital front-end 31, 33 of a digital front end unit 30.

The device shown in Fig. 1 is provided with a plurality of commonly known antenna beam-forming units 41, 42 of a beam-forming network 40 which are each used by a satellite signal tracking unit 43, 44 in order to track a related satellite from which the wanted signal is transmitted.

The inventive device is further equipped with second antenna beam-forming units 51, 52 which are used to detect the direction of arrival of a respective interference signal according to the method of the invention. The digital data coming from the N-receiver chains are collected in a DOA unit 60 to evaluate a cross-covariance matrix and the directions of arrival of the interferences are evaluated using a DOA algorithm (e.g. an ESPRIT algorithm or and MUSIC algorithm can be used).

The interferers are detected by comparing the noise level to the potential received interferer power level in a characterization unit 53, 54 of an interferer characterization module 50 connected to a respective beam-forming unit 51, 52.

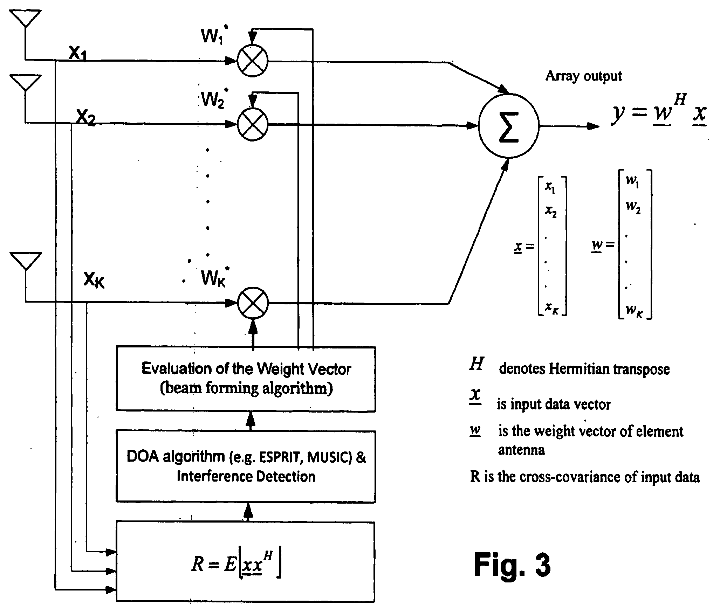

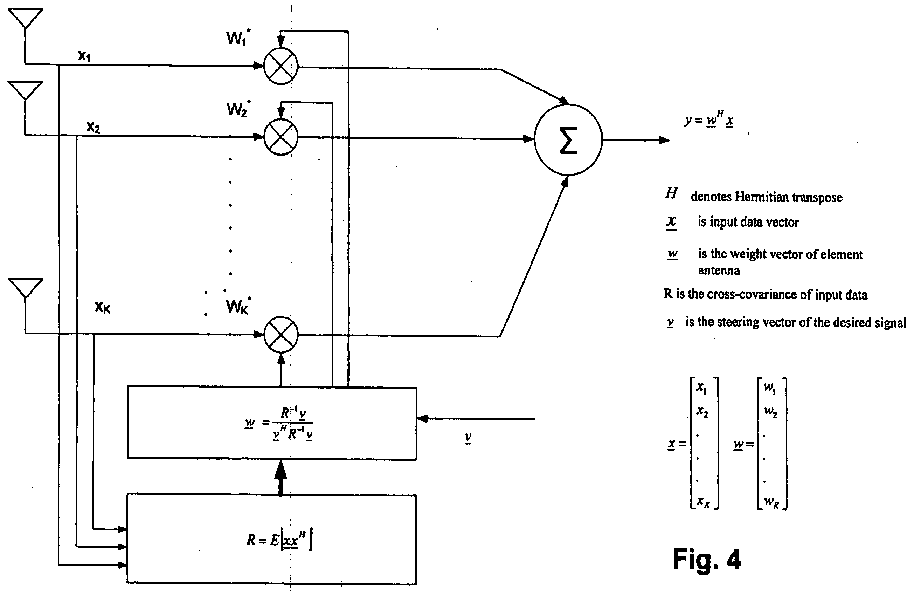

The method will now be explained with respect to Figs. 3 and 4.

Fig. 3 considers that only one interferer has been found and therefore only one beam-former algorithm is performed. If P-interferers are detected (like in the example of Fig. 1), P beam-former algorithms are to be performed.

In Fig. 4, the minimum variance distortionless response (MVDR) is proposed as an example for the beam-former algorithm. Other beam-former algorithms can be applied. The steering vector *v* of the desired signal (i.e. the interference) is easily evaluated knowing its azimuth and elevation.

Applying the beam-former algorithm on each interferer, the interference to noise ratio will increase. Interference time characterization will then be carried out only by extracting the digital samples after the beam-forming step. The frequency characterization will be carried out by usually known methods (e.g. the Welch method) after the beam-forming step.

The direction-of-arrival (DOA) algorithm is quite demanding in terms of time and processing. The first constraint is the data rate between the digital front-end and the beam-forming network (Fig. 2). As the frequency sampling is often very high with a high number of bit quantization, the entire digital samples may not be transmitted to the beam forming network.

There may also be some limitations (sequence length, quantization) on the amount of data to be processed to use the DOA algorithm. For noise like interference (wide band or narrow band interferences) there is no problem to decrease the number of digital samples at the input of the algorithm by considering only a short sequence or by under-sampling. However, for pulse interferences, it may be critical, as the presence of the complete pulse is required to be able to detect it. The principle is shown in Fig. 2 for the characterization of the interference i. Each receiver chain has a pulse detector, similar to the one used for the pulse blanking. As soon as a pulse is detected in a chain, the same short sequence of samples including the pulse is sent by all the receiver chains to the DOA processor. If more than one pulse is detected, all the sample sequences containing pulses of each receiver chain are sent to the DOA processor. By this way, the amount of data to be processed is decreased and the required samples have been selected to correctly carry out the DOA algorithm.

The invention is not restricted to the above-described exemplary embodiment, which only serves for a general explanation of the core concept of the invention. Rather more, it is within the scope of protection that the method of detecting a direction of arrival of at least one interference signal and system to carry out said method in accordance with the invention could also adopt different forms than those of the embodiments described above.

The reference symbols in the claims, the description and the drawings serve only to provide a better understanding of the invention and are not intended to limit the scope of protection.

### List of reference signs

- 10: antenna array
- 11: antenna element
- 12: antenna element
- 13: antenna element
- 16: signal conditioning unit
- 17: signal conditioning unit
- 18: signal conditioning unit
- 20: receiving front end
- 21: receiver chain
- 23: receiver chain
- 30: digital front end unit
- 31: digital front end
- 33: digital front end
- 40: beam-forming network
- 41: antenna beam-forming unit
- 42: antenna beam-forming unit
- 43: satellite signal tracking unit
- 44: satellite signal tracking unit
- 50: interferer characterization module
- 51: second antenna beam-forming unit
- 52: second antenna beam-forming unit
- 53: characterization unit
- 54: characterization unit

## Claims

1. A method of detecting a direction of arrival of at least one interference signal interfering a wanted signal in a plurality of received signals, wherein the signals are received by a plurality of antenna elements (11, 12, 13) of an antenna array (10), each antenna element (11, 12, 13) being assigned to a receiver chain (21, 23), **characterized by** the steps of
- upon detection of a pulse in the signals received by a receiver chain, providing the same short sample sequence from said plurality of received signals including the pulse by all the receiver chains to a DOA processor, and identifying said at least one interference signal in said plurality of received signals in the DOA processor by comparing the noise level of said received signals with a power level of a signal received from a potential interferer;
- applying a beam forming signal processing technique to said at least one identified interference signal;
- evaluating the direction of arrival from the results of said beam forming signal processing step.

2. A method according to claim 1,
- wherein, in the case that more than one pulse is detected, all the sample sequences containing pulses of each receiver chain are sent to the DOA processor.

3. A method according to claim 1 or 2,
- wherein digital data are obtained from the signals received by a plurality of receivers (21, 23), each of the receivers being connected to at least one of said plurality of antennas (11, 12, 13), and
- wherein said digital data coming from said digital receivers are collected to evaluate a cross-covariance matrix.

4. A method according to claim 1, 2 or 3,
wherein said beam forming signal processing technique is a pre-correlation beam forming signal processing technique.

5. A method according to claim 1, 2 or 3,
wherein said beam forming signal processing technique is a post-correlation beam forming signal processing technique.

6. A method according to one of claims 2 to 5,
wherein said evaluation step is carried out by applying a direction-of-arrival (DOA) algorithm to said cross-covariance matrix.

7. A method according to claim 6,
wherein said DOA algorithm is an ESPRIT or a MUSIC algorithm.

8. A signal receiving and processing device comprising
- an antenna array (10) with a plurality of antenna elements (11,12, 13),
- a plurality of signal receivers (21, 23) wherein each of the receivers is connected to at least one of said plurality of antenna elements (11, 12, 13) and
- a plurality of signal processing sub-systems (30, 40, 50) which are adapted to carry out a method according to one of claims 1 to 7.

## Patentansprüche

1. Verfahren zur Erkennung einer Ankunftsrichtung mindestens eines Störsignals, das ein Nutzsignal in einer Vielzahl von empfangenen Signalen stört, wobei die Signale durch eine Vielzahl von Antennenelementen (11, 12, 13) einer Antennengruppe (10) empfangen werden, wobei jedes Antennenelement (11, 12, 13) einer Empfangskette (21, 23) zugeordnet ist, **gekennzeichnet durch** die Schritte
- bei Erkennung eines Pulses in den Signalen, die **durch** eine Empfangskette empfangen wurden, Bereitstellen der gleichen kurzen Abtastsequenz **durch** die Vielzahl von empfangenen Signalen einschließlich des Pulses **durch** alle Empfangsketten zu einem DOA Prozessor, und Identifizieren des mindestens einen Störsignals in der Vielzahl von empfangenen Signalen in dem DOA Prozessor **durch** Vergleichen des Rauschpegels der empfangenen Signale mit einem Leistungspegel eines Signals, das von einem potentiellen Störer empfangen wurde;
- Anwenden einer Beamforming-Signalverarbeitungstechnik auf das mindestens eine identifizierte Störsignal;
- Auswerten der Ankunftsrichtung **durch** die Ergebnisse des Beamforming-Signalverarbeitungsschritts.

2. Verfahren nach Anspruch 1,
wobei, in dem Fall, dass mehr als ein Puls detektiert wird, alle der Abtastsequenzen, die Pulse jeder Empfangskette enthalten, zu dem DOA Prozessor gesendet werden.

3. Verfahren nach Anspruch 1 oder 2,
wobei digitale Daten durch die Signale, die durch eine Vielzahl von Empfängern (21, 23) empfangen wurden, erhalten werden, wobei jeder der Empfänger mit mindestens einer der Vielzahl von Antennen (11, 12, 13) verbunden ist, und
wobei die digitalen Daten, die von den digitalen Empfängern kommen, gesammelt werden, um eine Kreuzkovarianzmatrix auszuwerten.

4. Verfahren nach Anspruch 1, 2 oder 3,
wobei die Beamforming-Signalverarbeitungstechnik eine Vor-Korrelations-Beamforming-Signalverarbeitungstechnik ist.

5. Verfahren nach Anspruch 1, 2 oder 3,
wobei die Beamforming-Signalverarbeitungstechnik eine Post-Korrelations-Beamforming-Signalverarbeitungstechnik ist.

6. Verfahren nach einem der Ansprüche 2 bis 5,
wobei der Auswertungsschritt durch Anwenden eines Ankunftsrichtungs-(DOA) Algorithmus auf die Kreuzkovarianzmatrix ausgeführt wird.

7. Verfahren nach Anspruch 6,
wobei der DOA Algorithmus ein ESPRIT oder ein MUSIC Algorithmus ist.

8. Signalempfangs- und Verarbeitungseinrichtung umfassend
- eine Antennengruppe (10) mit einer Vielzahl von Antennenelementen (11, 12, 13),
- eine Vielzahl von Signalempfängern (21, 23), wobei jeder der Empfänger mit mindestens einem der Vielzahl von Antennenelementen (11, 12, 13) verbunden ist und
- eine Vielzahl von Signalverarbeitungssubsystemen (30, 40, 50), welche dazu ausgebildet sind, ein Verfahren nach einem der Ansprüche 1 bis 7 auszuführen.

## Revendications

1. Procédé de détection d'une direction d'arrivée d'au moins un signal de brouillage brouillant un signal désiré dans une pluralité de signaux reçus, dans lequel les signaux sont reçus par une pluralité d'éléments (11, 12, 13) d'antennes d'un réseau (10) d'antennes, chaque élément (11, 12, 13) d'antenne étant affecté à une chaîne de récepteurs (21, 23), **caractérisé par** les étapes de
- à la détection d'une impulsion dans les signaux reçus par une chaîne de récepteurs, fourniture de la même séquence courte d'échantillons provenant de ladite pluralité de signaux reçus incluant l'impulsion par toutes les chaînes de récepteurs à un processeur DOA, et identification dudit au moins un signal de brouillage dans ladite pluralité de signaux reçus dans le processeur DOA en comparant le niveau de bruit desdits signaux reçus avec un niveau de puissance d'un signal reçu d'un brouilleur potentiel ;
- application d'une technique de traitement de signaux de formation de faisceaux audit au moins un signal de brouillage identifié ;
- évaluation de la direction d'arrivée à partir des résultats de ladite étape de traitement de signaux de formation de faisceaux.

2. Procédé selon la revendication 1,
- dans lequel, dans le cas où plus d'une impulsion est détectée, toutes les séquences d'échantillons contenant des impulsions de chaque chaîne de récepteurs sont envoyées au processeur DOA.

3. Procédé selon la revendication 1 ou 2,
- dans lequel des données numériques sont obtenues à partir des signaux reçus par une pluralité de récepteurs (21, 23), chacun des récepteurs étant connecté à au moins une de ladite pluralité d'antennes (11, 12, 13), et
- dans lequel lesdites données numériques provenant desdits récepteurs numériques sont collectées pour évaluer une matrice d'intercovariance.

4. Procédé selon la revendication 1, 2 ou 3,
dans lequel ladite technique de traitement de signaux de formation de faisceaux est une technique de traitement de signaux de formation de faisceaux pré-corrélation.

5. Procédé selon la revendication 1, 2 ou 3,
dans lequel ladite technique de traitement de signaux de formation de faisceaux est une technique de traitement de signaux de formation de faisceaux post-corrélation.

6. Procédé selon l'une des revendications 2 à 5,
dans lequel ladite étape d'évaluation est mise en oeuvre en appliquant un algorithme de direction d'arrivée (DOA) à ladite matrice d'intercovariance.

7. Procédé selon la revendication 6,
dans lequel ledit algorithme DOA est un algorithme ESPRIT ou MUSIC.

8. Dispositif de réception et de traitement de signaux comprenant
- un réseau (10) d'antennes avec une pluralité d'éléments (11, 12, 13) d'antennes,
- une pluralité de récepteurs (21, 23) de signaux dans lequel chacun des récepteurs est connecté à au moins un de ladite pluralité d'éléments (11, 12, 13) d'antennes et
- une pluralité de sous-systèmes (30, 40, 50) de traitement de signaux qui sont adaptés à mettre en oeuvre un procédé selon l'une des revendications 1 à 7.
